# EUROPEAN PATENT SPECIFICATION

(11) **EP 2 267 366 B1**
(45) Date of publication and mention of the grant of the patent: **03.06.2015**
(21) Application number: 08720359.2
(22) Date of filing: 06.03.2008
(51) Int. Cl.: F23C 99/00, F22B 35/00, F23C 9/00, F23N 1/02, F23L 7/00

(54) **METHOD AND APPARATUS OF CONTROLLING COMBUSTION IN OXYFUEL COMBUSTION BOILER**
VERFAHREN ZUR STEUERUNG VON VERBRENNUNG IN EINEM SAUERSTOFFVERBRENNUNGSKESSEL UND VORRICHTUNG DAFÜR
PROCÉDÉ DE RÉGULATION DE LA COMBUSTION DANS UNE CHAUDIÈRE DE COMBUSTION D'OXYGÈNE ET APPAREIL ASSOCIÉ

(43) Date of publication of application: 29.12.2010
(73) Proprietor: IHI Corporation, Tokyo 135-8710 (JP); Electric Power Development Co., Ltd., Tokyo 104-8165 (JP)
(72) Inventor: TERUSHITA, Shuuhei, Tokyo 135-8710 (JP); YAMADA, Toshihiko, Tokyo 135-8710 (JP); WATANABE, Shuzo, Tokyo 135-8710 (JP); UCHIDA, Terutoshi, Tokyo 135-8710 (JP); MISAWA, Nobuhiro, Tokyo 104-8165 (JP)
(74) Representative: Walcher, Armin
(86) International application number: PCT/JP2008/000473
(87) International publication number: WO 2009/110035

(56) References cited:
- EP-A1- 1 186 675
- EP-A1- 2 267 366
- EP-A2- 0 081 114
- EP-A2- 1 698 827
- JP-A- 55 003 521
- JP-A- 2001 115 204
- JP-A- 2001 336 736
- JP-A- 2007 147 162
- US-A- 4 177 950
- US-A1- 2002 185 043
- US-A1- 2004 261 671
- US-B1- 7 261 046

## Description

### Technical Field

The present invention relates to an apparatus of controlling combustion in an oxyfuel combustion boiler.

### Background Art

An increased carbon dioxide (CO₂) density in the atmosphere has proved to be one of major factors of global warming which has recently come into attention as a global-scale environmental problem. A thermal power plant appears close-up as a fixed source of discharging these substances. Fuel for thermal power generation may be oil, natural gas and coal, among which coal is especially anticipated to have a large future demand due to its greater potential reserves.

Coal contains a higher percentage of carbon as compared with natural gas and oil, together with other components such as hydrogen, nitrogen and sulfur, and ash as an inorganic component. Therefore, when coal is burned in the air, most of the composition of the combustion exhaust gas is occupied by nitrogen (about 70%), with the remainder occupied by carbon dioxide CO₂, sulfur oxide SOₓ, nitrogen oxide NOₓ, dust comprising ash and unburned coal particles, and oxygen (about 4%). The combustion exhaust gas is thus subjected to exhaust gas treatments such as denitration, desulfurization and dedusting so that NOₓ, SOₓ and particulates fall under their respective environmental emission standard values before the emission to the atmosphere through a stack.

NOₓ occurring in the combustion exhaust gas is divided into a thermal NOₓ generated from oxidization of nitrogen in the air by oxygen and a fuel NOₓ generated as a result of oxidization of nitrogen in the fuel. Up until now, a combustion method of lowering the flame temperature has been employed for reduction of the thermal NOₓ whereas another combustion method of forming a fuel-excess region for deoxidizing NOₓ within a burner has been employed for reduction of the fuel NOₓ.

In case of using a fuel containing sulfur such as coal, a wet or dry desulfurizing device has been provided to remove SOₓ occurring in the combustion exhaust gas as a result of the combustion.

It is desired on the other hand that a large amount of carbon dioxide generated in the combustion exhaust gas be also separated and removed with high efficiency. A possible method of capturing carbon dioxide in the combustion exhaust gas has hitherto been reviewed which includes a method of causing an amine or other absorbing liquid to absorb it, an adsorption method of causing a solid adsorbent to adsorb it or a membrane separation method, all of which have a low conversion efficiency, thus not yet reaching a practical use level of the CO₂ capture from a coal burning boiler.

Accordingly, a combustion technology of a fuel with oxygen instead of air has been proposed as an effective manner to address at one time both the problem of separation of carbon dioxide in the combustion exhaust gas and the problem of suppression of the thermal NOₓ.

When coal is burned with oxygen, generation of the thermal NOₓ is not seen and most of the combustion exhaust gas is occupied by carbon dioxide with the remainder occupied by other gases containing the fuel NOₓ and SOₓ, consequently achieving a relatively easy liquefaction and separation of the carbon dioxide through cooling of the combustion exhaust gas, as described in JP 5231609 A. EP 0081114 discloses an apparatus for controlling combustion in a boiler.

### Summary of Invention

### Technical Problems

In a conventional air-combustion coal burning boiler, nitrogen is a balance gas for oxygen which is a major component gas other than oxygen in the air used for combustion of pulverized coal whereas in an oxyfuel combustion boiler, carbon dioxide and steam become balance gases for oxygen since they are main component gases other than oxygen in the recirculating exhaust gas.

Thermal properties, however, differ between nitrogen and carbon dioxide and steam. Hence, there occurs a problem that when the oxygen density (boiler-brought-in oxygen density) for a total amount of gases introduced into the oxyfuel combustion boiler is set to approx. 21% which is an oxygen density in the air, the flame temperature lowers as compared with the air combustion, resulting in an insufficient furnace heat absorption.

The invention was made in view of the above and has its object to provide an apparatus of controlling combustion in an oxyfuel combustion boiler, ensuring a sufficient furnace heat absorption through prevention of lowering of flame temperature to thereby achieve stabilized oxyfuel combustion operations.

### Solution to Problems

The invention is directed to an apparatus of controlling combustion in an oxyfuel combustion boiler where while oxygen fed from an air separation unit is introduced into a coal burning boiler, an exhaust gas in recirculation is introduced as primary and secondary recirculating exhaust gases into a mill and the coal burning boiler, respectively, the pulverized coal pulverized by the mill being transferred by said primary recirculating exhaust gas to a burner for oxyfuel combustion with said oxygen and said secondary recirculating exhaust gas, the apparatus comprising
an O₂ density monitor for sensing an O₂ density of oxygen to be introduced into the coal burning boiler,
a flowmeter for sensing a flow rate of oxygen to be introduced into the coal burning boiler,
an O₂ density monitor for sensing an O₂ density of the primary recirculating exhaust gas to be introduced into the mill,
a flowmeter for sensing a flow rate of the primary recirculating exhaust gas to be introduced into the mill,
an O₂ density monitor for sensing an O₂ density of the secondary recirculating exhaust gas to be introduced into the coal burning boiler,
a flowmeter for sensing a flow rate of the secondary recirculating exhaust gas to be introduced into the coal burning boiler,
a flow rate regulator for regulating a flow rate of total recirculating exhaust gases to be introduced into the mill and the coal burning boiler and
a controller for calculating a boiler-brought-in oxygen density which is an oxygen density for a total amount of gases introduced into the coal burning boiler on the basis of the O₂ densities sensed by the respective O₂ density monitors and the flow rates sensed by the respective flowmeters, the controller outputting a flow rate control signal to the flow rate regulator such that the boiler-brought-in oxygen density falls within a predetermined range.

The invention is further directed to an apparatus of controlling combustion in an oxyfuel combustion boiler where while oxygen fed from an air separation unit is introduced into a coal burning boiler, an exhaust gas in recirculation is introduced as primary and secondary recirculating exhaust gases into a mill and the coal burning boiler, respectively, the pulverized coal pulverized by the mill being transferred by said primary recirculating exhaust gas to a burner for oxyfuel combustion with said oxygen and said secondary recirculating exhaust gas, the apparatus comprising
an O₂ density monitor for sensing an O₂ density of oxygen to be introduced into the coal burning boiler,
a flowmeter for sensing a flow rate of oxygen to be introduced into the coal burning boiler,
an O₂ density monitor for sensing an O₂ density of total recirculating exhaust gases to be introduced into the mill and the coal burning boiler,
a flowmeter for sensing a flow rate of total recirculating exhaust gases to be introduced into the mill and the coal burning boiler,
a flow rate regulator for regulating a flow rate of the total recirculating exhaust gases to be introduced into the mill and the coal burning boiler and
a controller for calculating a boiler-brought-in oxygen density which is an oxygen density for a total amount of gases introduced into the coal burning boiler on the basis of the O₂ densities sensed by the respective O₂ density monitors and the flow rates sensed by the respective flowmeters, the controller outputting a flow rate control signal to the flow rate regulator such that the boiler-brought-in oxygen density falls within a predetermined range.

In the apparatus for controlling combustion in the oxyfuel combustion boiler, preferably, the boiler-brought-in oxygen density falls within a range from 25 to 30%.

### Advantageous Effects of Invention

According to an apparatus of controlling combustion in an oxyfuel combustion boiler of the invention, there can be obtained an excellent effect of ensuring a sufficient furnace heat absorption through prevention of lowering of flame temperature to thereby achieve stabilized oxyfuel combustion operations.

### Brief Description of Drawings

Fig. 1 is a general schematic configuration diagram of an embodiment of the invention;
Fig. 2 is a flowchart of a flow of control in the embodiment of the invention;
Fig. 3 is a graph representing a relationship between boiler-brought-in oxygen density and furnace heat absorption in a boiler; and
Fig. 4 is a general schematic configuration diagram of a further embodiment of the invention.

### Reference Signs List

- 1: coal bunker
- 2: coal feeder
- 3: mill
- 4: coal burning boiler
- 5: wind box
- 6: burner
- 7: exhaust gas line
- 8: air preheater
- 10: air separation unit
- 11: forced draft fan
- 12: primary recirculating exhaust gas line
- 13: cold bypass line
- 16: secondary recirculating exhaust gas line
- 17: oxygen feed line for secondary recirculating exhaust gas
- 18: oxygen feed line for wind box
- 20: induced draft fan
- 22: O₂ density monitor
- 22a: O₂ density
- 23: flowmeter
- 23a: flow rate
- 24: O₂ density monitor
- 24a: O₂ density
- 25: flowmeter
- 25a: flow rate
- 26: O₂ density monitor
- 26a: O₂ density
- 27: flowmeter
- 27a: flow rate
- 28: recirculating exhaust gas line
- 29: flow rate regulating damper (flow rate regulator)
- 29a: opening degree control signal (flow rate control signal)
- 30: controller
- 31: O₂ density monitor
- 31a: O₂ density
- 32: flowmeter
- 32a: flow rate
- 33: O₂ density monitor
- 33a: O₂ density
- 34: flowmeter
- 34a: flow rate

### Description of Embodiments

Embodiments of the invention will be described with reference to the accompanying drawings.

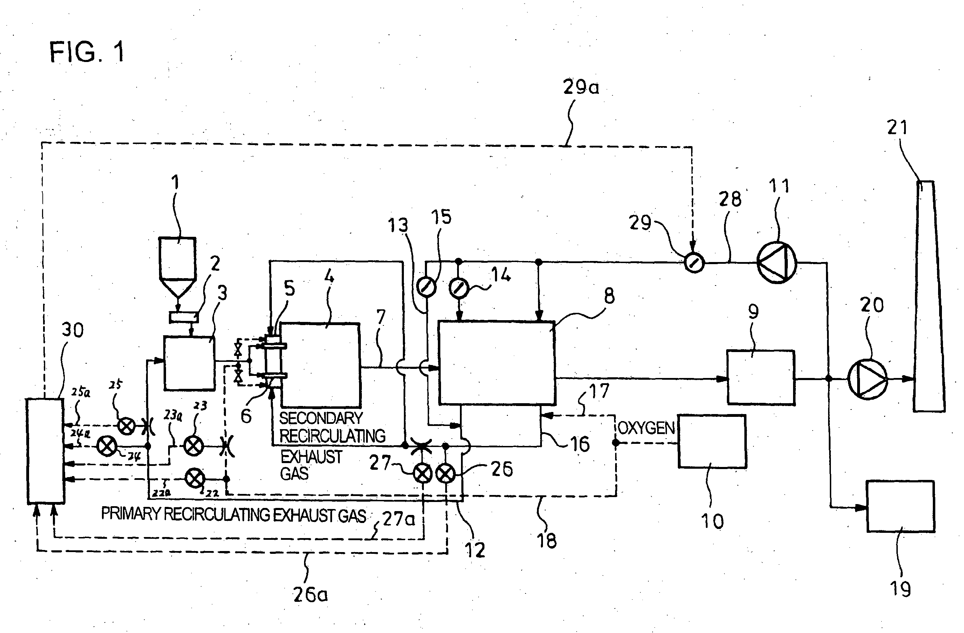

Referring to Figs. 1 to 3 showing an embodiment of the invention, reference numeral 1 denotes a coal bunker for coal storage; 2, a coal feeder for feeding coal stored in the bunker 1; 3, a mill for pulverization and drying of the coal from the feeder 2; 4, a coal burning boiler; 5, a wind box fitted to the boiler 4; 6, a burner disposed in the wind box 5 for burning pulverized coal from the mill 3; 7, an exhaust gas line through which flows an exhaust gas emitted from the boiler 4; 8, an air preheater for heat exchange of the exhaust gas flowing through the exhaust gas line 7 with primary and secondary recirculating exhaust gases; 9, exhaust gas treating devices such as a desulfurizer and a dust collector for treatment of the exhaust gas passing through the air preheater 8; 10, an air separation unit for production of oxygen; 11, a forced draft fan (FDF) for forcedly sending the exhaust gas purified by the treating devices 9 as primary and secondary recirculating exhaust gases; 12, a primary recirculating exhaust gas line for leading a part of the exhaust gas forcedly sent by the forced draft fan 11 to the mill 3 as the primary recirculating exhaust gas through the air preheater 8 for preheating; 13, a cold bypass line allowing a part of the primary recirculating exhaust gas to be led to the mill 3 to bypass the air preheater 8 to thereby control the temperature of the primary recirculating exhaust gas; 14, a flow rate regulating damper incorporated in the primary recirculating exhaust gas line 12 for regulating a flow rate of the primary recirculating exhaust gas passing through the air preheater 8; 15, a flow rate regulating damper incorporated in the cold bypass line 13 for regulating a flow rate of the primary recirculating exhaust gas bypassing the air preheater 8; 16, a secondary recirculating exhaust gas line for leading a part of the exhaust gas forcedly sent by the forced draft fan 11 to the wind box 5 as the secondary recirculating exhaust gas through the air preheater 8 for preheating; 17, an oxygen feed line for the secondary recirculating exhaust gas which feeds the secondary recirculating exhaust gas line 16 with oxygen from the air separation unit 10; 18, an oxygen feed line for the wind box which directly feeds the wind box 5 with oxygen from the air separation unit 10; 19, a capture device for capturing CO₂ etc. from the exhaust gas; 20, an induced draft fan (IDF) disposed downstream of the exhaust gas treating devices 9 for inducedly sucking down the exhaust gas; and 21, a stack for emission to the atmosphere of the exhaust gas purified by the exhaust gas treating devices 9 and induced by the induced draft fan 20.

Incorporated in the oxygen feed line 18 for the wind box are an O₂ density monitor 22 and a flowmeter 23 for measuring, respectively, an O₂ density 22a and a flow rate 23a of oxygen to be directly fed to the wind box 5 of the coal burning boiler 4.

Incorporated in the primary recirculating exhaust gas line 12 at an inlet of the mill 3 are an O₂ density monitor 24 and a flowmeter 25 for sensing, respectively, an O₂ density 24a and a flow rate 25a of the primary recirculating exhaust gas to be introduced into the mill 3.

Incorporated in the secondary recirculating exhaust gas line 16 are an O₂ density monitor 26 and a flowmeter 27 for sensing, respectively, an O₂ density 26a and a flow rate 27a of the secondary recirculating exhaust gas fed with oxygen from the oxygen feed line 17 for secondary recirculating exhaust gas.

Incorporated in the a recirculating exhaust gas line 28 on an outlet side of the forced draft fan 11 and upstream of branch points to the primary and secondary recirculating exhaust gas lines 12 and 16 is a flow rate regulating damper 29 acting as a flow rate regulator for regulating a flow rate of total recirculating exhaust gases to be introduced into the mill 3 and the coal burning boiler 4.

Further, a controller 30 is disposed for calculating a boiler-brought-in oxygen density which is an oxygen density for a total amount of gases introduced into the coal burning boiler 4 on the basis of the O₂ densities 22a, 24a and 26a measured by the O₂ density monitors 22, 24 and 26, respectively, and the flow rates 23a, 25a and 27a measured by the flowmeters 23, 25 and 27, respectively, the controller 30 outputting an opening degree control signal 29a as flow rate control signal to the flow rate regulating damper 29 such that the boiler-brought-in oxygen density falls within a predetermined range. In place of the flow rate regulating damper 29, any other flow rate regulator such as a damper may be used to which the flow rate control signal is outputted from the controller 30.

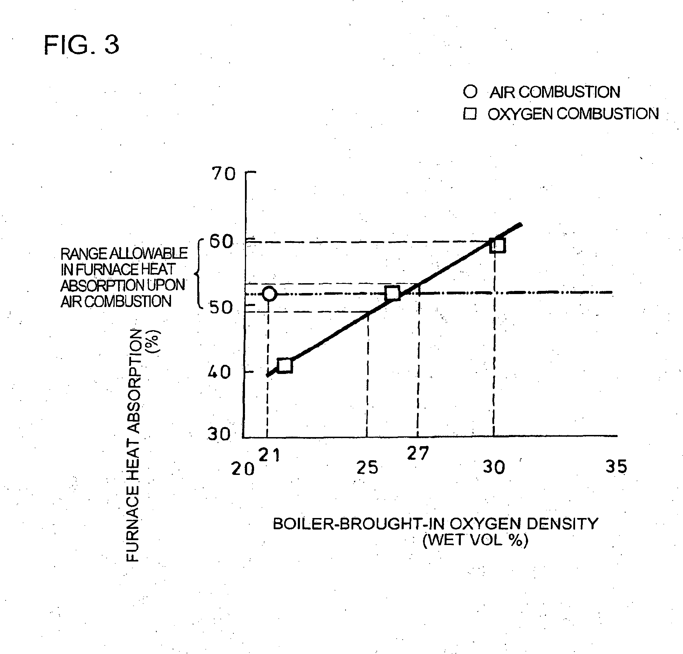

As shown in Fig. 3, the range of the boiler-brought-in oxygen density is preferably from 25 to 30% and is particularly preferably of the order of 27%. This is based on that the boiler-brought-in oxygen density satisfying the furnace heat absorption allowable range is 25 to 30% in the oxyfuel combustion environment when a furnace heat absorption allowable range is defined, from operation results in the air combustion environment, to be of the order of from 49 to 60% on the basis of the fact that furnace heat absorption of the coal burning boiler 4 becomes of the order of 52% in the case of the air oxygen density of 21%.

Operations in the above illustrated embodiment will be described.

In the normal operation of the coal burning boiler 4 as set forth hereinabove, the coal stored in the coal bunker 1 is fed by the coal feeder 2 to the mill 3 where coal is pulverized into pulverized coal. A part of the exhaust gas forcedly sent by the forced draft fan 11 from the recirculating exhaust gas line 28 is led as primary recirculating exhaust gas through the primary recirculating exhaust gas line 12 into the mill 3 via the air preheater 8 for preheating; the primary recirculating exhaust gas dries the coal fed to the mill 3 and transfers the pulverized coal produced by the mill 3 to the burner 6. Another part of the exhaust gas forcedly sent by the forced draft fan 11 from the recirculating exhaust gas line 28 is led as secondary recirculating exhaust gas through the secondary recirculating exhaust gas line 16, via the air preheater 8 for preheating, into the wind box 5 of the coal burning boiler 4 to which oxygen produced by the air separation unit 10 is directly fed through the oxygen feed line 18 for wind box, so that the pulverized coal is subjected to oxyfuel combustion within the coal burning boiler 4.

At the start-up of the coal burning boiler 4, air (not shown) in lieu of the primary recirculating exhaust gas is introduced into the mill 3 so that the air dries coal fed to the mill 3 and transfers pulverized coal obtained therein to the burner 6. Air (not shown) instead of the secondary recirculating exhaust gas and oxygen is fed to the wind box 5 of the coal burning boiler 4 so that the pulverized coal undergoes air combustion within the coal burning boiler 4. When the heat absorption of the coal burning boiler 4 reaches a predetermined value, the air is switched to the primary recirculating exhaust gas, the secondary recirculating exhaust gas and oxygen for shifting to oxyfuel combustion.

An exhaust gas from the coal burning boiler 4 is introduced through the exhaust gas line 7 into the air preheater 8 where the primary and secondary recirculating exhaust gases are heated and subjected to heat recovery. The exhaust gas passing through the air preheater 8 goes to the exhaust gas treating devices 9 such as a desulfurizer and a dust collector for desulfurization and dust collection, with the result that the exhaust gas purified by the exhaust gas treating devices 9 is inducedly sucked by the induced draft fan 20 before the emission through the stack 21 to the atmosphere. The exhaust gas passing through the exhaust gas treating devices 9 is partly recirculated by the forced draft fan 11 and partly introduced into the capture device 19 for the capture of CO₂ etc. from the exhaust gas.

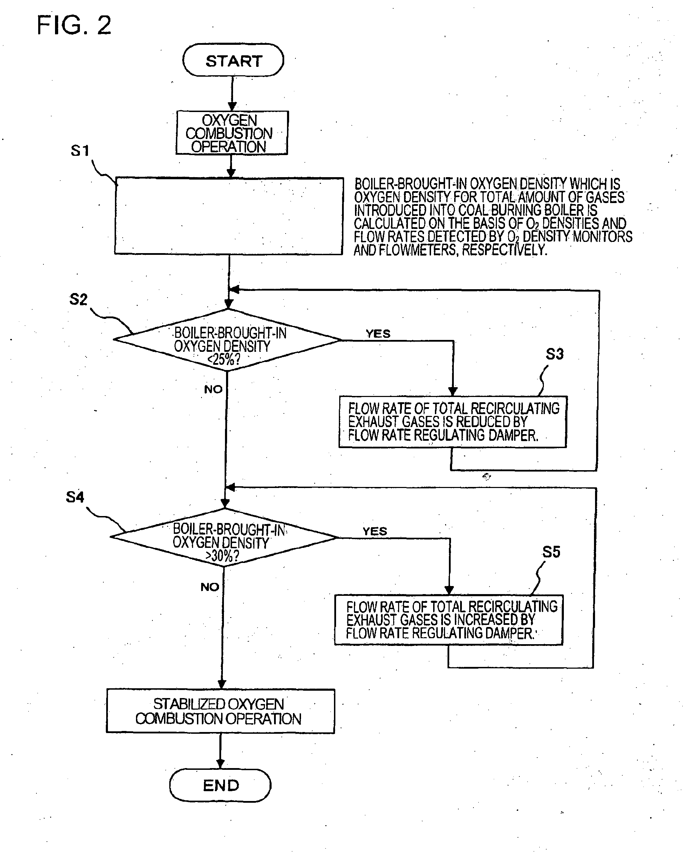

In the normal operation of the coal burning boiler 4 of the illustrated embodiment, the O₂ density 22a of oxygen to be directly fed to the wind box 5 of the coal burning boiler 4 is sensed by the O₂ density monitor 22; the flow rate 23a of oxygen to be directly fed to the wind box 5 of the coal burning boiler 4 is sensed by the flowmeter 23; the O₂ density 24a of the primary recirculating exhaust gas to be introduced into the mill 3 is sensed by the O₂ density monitor 24; the flow rate 25a of the primary recirculating exhaust gas to be introduced into the mill 3 is sensed by the flowmeter 25; the O₂ density 26a of the secondary recirculating exhaust gas fed with oxygen from the oxygen feed line 17 for secondary recirculating exhaust gas is sensed by the O₂ density monitor 26; the flow rate 27a of the secondary recirculating exhaust gas fed with oxygen from the oxygen feed line 17 for secondary recirculating exhaust gas is sensed by the flowmeter 27; and the boiler-brought-in oxygen density which is an oxygen density to the total amount of gases introduced into the coal burning boiler 4 is calculated by the controller 30 on the basis of the O₂ densities 22a, 24a and 26a sensed by the O₂ density monitors 22, 24 and 26, respectively, and the flow rates 23a, 25a and 27a sensed by the flowmeters 23, 25 and 27, respectively (see step S1 of Fig. 2).

It is then determined whether the boiler-brought-in oxygen density is below 25% (see step S2 of Fig. 2). If affirmative, i.e., if the boiler-brought-in oxygen density is below 25%, then an opening degree of the flow rate regulating damper 29 acting as the flow rate regulator is reduced in response to the opening degree control signal 29a serving as flow rate control signal outputted from the controller 30 to thereby reduce a flow rate of the total recirculating exhaust gases flowing through the recirculating exhaust gas line 28 (see step S3 of Fig. 2).

If negative, i.e., if the boiler-brought-in oxygen density is not below 25%, then it is determined whether the boiler-brought-in oxygen density is over 30% (see step S4 of Fig. 2). If affirmative, i.e., if the boiler-brought-in oxygen density is over 30%, then the opening degree of the flow rate regulating damper 29 acting as flow rate regulator is increased in response to the opening degree control signal 29a serving as flow rate control signal outputted from the controller 30 to thereby increase the flow rate of the total recirculating exhaust gases flowing through the recirculating exhaust gas line 28 (see step S5 of Fig. 2). As a result, the boiler-brought-in oxygen density falls within a predetermined range (25 to 30%) to prevent the flame temperature from lowering, to obtain a sufficient furnace heat absorption lying within a range of the order of ±5% of the furnace heat absorption obtained from the operation results in the air combustion environment, thereby achieving stabilized oxyfuel combustion operations.

The sufficient furnace heat absorption is thus obtained through prevention of lowering of the flame temperature, enabling the oxyfuel combustion operations to be performed in a stable manner.

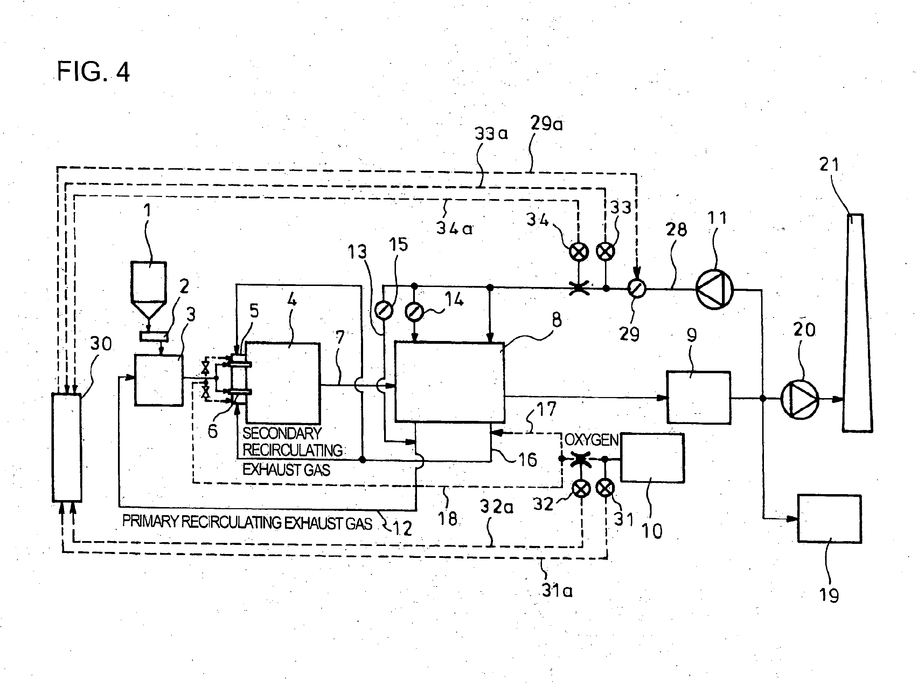

Fig. 4 shows a further embodiment of the invention where parts similar to those in Fig. 1 are represented by the same reference numerals. The further embodiment is similar in fundamental configuration to that in Fig. 1 and is characteristic, as shown in Fig. 4, in that an O₂ density monitor 31 and a flowmeter 32 for sensing, respectively, an O₂ density 31a and a flow rate 32a of oxygen to be introduced into the coal burning boiler 4 are incorporated in the oxygen feed line from the air separation unit 10 upstream of a branch point between the oxygen feed line 17 for secondary recirculating exhaust gas and the oxygen feed line 18 for wind box, incorporated in the recirculating exhaust gas line 28 being an O₂ density monitor 33, a flowmeter 34 and a flow rate regulating damper 29 acting as flow rate regulator, respectively, for sensing an O₂ density 33a and a flow rate 34a of and for regulating the flow rate of the total recirculating exhaust gases to be introduced into the mill 3 and the coal burning boiler 4, a boiler-brought-in oxygen density of oxygen introduced into the coal burning boiler 4 being calculated in the controller 30 on the basis of the O₂ densities 31a and 33a sensed by the O₂ density monitors 31 and 33, respectively, and the flow rates 32a and 34a sensed by the flowmeters 32 and 34, respectively, an opening degree control signal 29a as flow rate control signal being outputted to the flow rate regulating damper 29 such that the boiler-brought-in oxygen density falls within a predetermined range (25 to 30%).

In the normal operation of the coal burning boiler 4 of this illustrated embodiment, the O₂ density 31a and the flow rate 32a of oxygen introduced into the coal burning boiler 4 are sensed by the O₂ density monitor 31 and the flowmeter 32, respectively; the O₂ density 33a and the flow rate 34a of the total recirculating exhaust gases to be introduced into the mill 3 and the coal burning boiler 4 are sensed by the O₂ density monitor 33 and the flowmeter 34, respectively. The boiler-brought-in oxygen density of oxygen introduced into the coal burning boiler 4 is calculated in the controller 30 on the basis of the O₂ densities 31a and 33a sensed by the O₂ density monitors 31 and 33, respectively, and the flow rates 32a and 34a sensed by the flowmeters 32 and 34, respectively (see step S1 of Fig. 2). It is determined whether the boiler-brought-in oxygen density is below 25% (see step S2 of Fig. 2); if affirmative, i.e., if the boiler-brought-in oxygen density is below 25%, the opening degree of the flow rate regulating damper 29 acting as flow rate regulator is reduced in response to the opening degree control signal 29a serving as flow rate control signal outputted from the controller 30 to thereby reduce the flow rate of the total recirculating exhaust gases flowing through the recirculating exhaust gas line 28 (see step S3 of Fig. 2); if negative, i.e., if the boiler-brought-in oxygen density is not below 25%, it is determined whether the boiler-brought-in oxygen density is over 30% (see step S4 of Fig. 2); and if affirmative, i.e., if the boiler-brought-in oxygen density is over 30%, the opening degree of the flow rate regulating damper 29 acting as flow rate regulator is increased in response to the opening degree control signal 29a serving as flow rate control signal outputted from the controller 30 to thereby increase the flow rate of the total recirculating exhaust gases flowing through the recirculating exhaust gas line 28 (see step S5 of Fig. 2), whereupon the boiler-brought-in oxygen density falls within the predetermined range (25 to 30%) to prevent the flame temperature from lowering, to obtain a sufficient furnace heat absorption lying within a range of the order of ±5% of the furnace heat absorption obtained from the operation results in the air combustion environment, thereby achieving stabilized oxyfuel combustion operations.

Thus, similar to the Fig. 1 embodiment, Fig. 4 embodiment also ensures a sufficient furnace heat absorption through prevention of lowering of the flame temperature, enabling the oxyfuel combustion operations to be performed in a stable manner.

Fig. 4 embodiment employs a less number of O₂ density monitors and flowmeters as compared with the Fig. 1 embodiment.

It is to be understood that a method and an apparatus of the invention for controlling combustion in an oxyfuel combustion boiler are not limited to the above embodiments and that various changes and modifications may be made without departing from the scope of the invention.

## Claims

1. An apparatus of controlling combustion in an oxyfuel combustion boiler where while oxygen fed from an air separation unit (10) is introduced into a coal burning boiler (4), an exhaust gas in recirculation is introduced as primary and secondary recirculating exhaust gases into a mill (3) and the coal burning boiler (4), respectively, the pulverized coal pulverized by the mill (3) being transferred by said primary recirculating exhaust gas to a burner (6) for oxyfuel combustion with said oxygen and said secondary recirculating exhaust gas, the apparatus comprising
an O₂ density monitor (22) for sensing an O₂ density (22a) of oxygen to be introduced into the coal burning boiler (4),
a flowmeter (23) for sensing a flow rate (23a) of oxygen to be introduced into the coal burning boiler (4),
an O₂ density monitor (24) for sensing an O₂ density (24a) of the primary recirculating exhaust gas to be introduced into the mill (3),
a flowmeter (25) for sensing a flow rate (25a) of the primary recirculating exhaust gas to be introduced into the mill (3),
an O₂ density monitor (26) for sensing an O₂ density (26a) of the secondary recirculating exhaust gas to be introduced into the coal burning boiler (4),
a flowmeter (27) for sensing a flow rate (27a) of the secondary recirculating exhaust gas to be introduced into the coal burning boiler (4),
a flow rate regulator (29) for regulating a flow rate of total recirculating exhaust gases to be introduced into the mill (3) and the coal burning boiler (4) and
a controller (30) for calculating a boiler-brought-in oxygen density which is an oxygen density for a total amount of gases introduced into the coal burning boiler (4) on the basis of the O₂ densities (22a, 24a, 26a) sensed by the respective O₂ density monitors (22, 24, 26) and the flow rates (23a, 25a, 27a) sensed by the respective flowmeters (23, 25, 27), the controller (30) outputting a flow rate control signal (29a) to the flow rate regulator (29) such that the boiler-brought-in oxygen density falls within a predetermined range.

2. An apparatus of controlling combustion in an oxyfuel combustion boiler where while oxygen fed from an air separation unit (10) is introduced into a coal burning boiler (4), an exhaust gas in recirculation is introduced as primary and secondary recirculating exhaust gases into a mill (3) and the coal burning boiler (4), respectively, the pulverized coal pulverized by the mill (3) being transferred by said primary recirculating exhaust gas to a burner (6) for oxyfuel combustion with said oxygen and said secondary recirculating exhaust gas, the apparatus comprising
an O₂ density monitor (31) for sensing an O₂ density (31a) of oxygen to be introduced into the coal burning boiler (4),
a flowmeter (32) for sensing a flow rate (32a) of oxygen to be introduced into the coal burning boiler (4),
an O₂ density monitor (33) for sensing an O₂ density (33a) of total recirculating exhaust gases to be introduced into the mill (3) and the coal burning boiler (4),
a flowmeter (34) for sensing a flow rate (34a) of total recirculating exhaust gases to be introduced into the mill (3) and the coal burning boiler (4),
a flow rate regulator (29) for regulating a flow rate of the total recirculating exhaust gases to be introduced into the mill (3) and the coal burning boiler (4) and
a controller (30) for calculating a boiler-brought-in oxygen density which is an oxygen density for a total amount of gases introduced into the coal burning boiler (4) on the basis of the O₂ densities (31a, 33a) sensed by the respective O₂ density monitors (31, 33) and the flow rates (32a, 34a) sensed by the respective flowmeters (32, 34), the controller (30) outputting a flow rate control signal (29a) to the flow rate regulator (29) such that the boiler-brought-in oxygen density falls within a predetermined range.

3. An apparatus of controlling combustion in an oxyfuel combustion boiler as claimed in claim 1 or 2, wherein the boiler-brought-in oxygen density falls within a range from 25 to 30%.

## Patentansprüche

1. Vorrichtung zum Steuern der Verbrennung in einem Oxyfuel-Verbrennungskessel, bei dem, während Sauerstoff, der von einer Luftabscheidungseinheit (10) zugeführt wird, in einen Kohleverbrennungskessel (4) eingeleitet wird, ein Abgas in Rückführung als erstes und zweites rückgeführtes Abgas in eine Mühle (3) bzw. in den Kohleverbrennungskessel (4) eingeleitet wird, wobei die pulverisierte Kohle, die durch die Mühle (3) pulverisiert wurde, durch das erste rückgeführte Abgas zu einem Brenner (6) für eine Oxyfuel-Verbrennung mit dem Sauerstoff und dem zweiten rückgeführten Abgas übertragen wird, wobei die Vorrichtung Folgendes umfasst:
eine O₂-Dichte-Überwachungseinheit (22) zum Messen einer O₂-Dichte (22a) von Sauerstoff, der in den Kohleverbrennungskessel (4) eingeleitet wird,
ein Durchflussmengenmessgerät (23) zum Messen einer Durchflussmenge (23a) von Sauerstoff, der in den Kohleverbrennungskessel (4) eingeleitet wird,
eine O₂-Dichte-Überwachungseinheit (24) zum Messen einer O₂-Dichte (24a) des ersten rückgeführten Abgases, das in die Mühle (3) eingeleitet wird,
ein Durchflussmengenmessgerät (25) zum Messen einer Durchflussmenge (25a) des ersten rückgeführten Abgases, das in die Mühle (3) eingeleitet wird,
eine O₂-Dichte-Überwachungseinheit (26) zum Messen einer O₂-Dichte (26a) des zweiten rückgeführten Abgases, das in den Kohleverbrennungskessel (4) eingeleitet wird,
ein Durchflussmengenmessgerät (27) zum Messen einer Durchflussmenge (27a) des zweiten rückgeführten Abgases, das in den Kohleverbrennungskessel (4) eingeleitet wird,
eine Durchflussmengen-Regulierungseinheit (29) zum Regulieren einer Durchflussmenge der gesamten rückgeführten Abgase, die in die Mühle (3) und in den Kohleverbrennungskessel (4) eingeleitet werden, und
eine Steuerung (30) zum Berechnen einer in den Kessel eingebrachten Sauerstoffdichte, die eine Sauerstoffdichte für eine Gesamtmenge von Gasen ist, die in den Kohleverbrennungskessel (4) eingeleitet wurde, auf der Basis der O₂-Dichten (22a, 24a, 26a), die von den jeweiligen O₂-Dichte-Überwachungseinheiten (22, 24, 26) gemessen wurden, und der Durchflussmengen (23a, 25a, 27a), die von den jeweiligen Durchflussmengenmessgeräten (23, 25, 27) gemessen wurden, wobei die Steuerung (30) ein Durchflussmengen-Steuersignal (29a) an die Durchflussmengen-Regulierungseinheit (29) ausgibt, derart, dass die in den Kessel eingebrachte Sauerstoffdichte in einen vorgegebenen Bereich fällt.

2. Vorrichtung zum Steuern einer Verbrennung in einem Oxyfuel-Verbrennungskessel, bei dem, während Sauerstoff, der von einer Luftabscheidungseinheit (10) zugeführt wird, in einen Kohleverbrennungskessel (4) eingeleitet wird, ein Abgas in Rückführung als erstes und zweites rückgeführtes Abgas in eine Mühle (3) bzw. in den Kohleverbrennungskessel (4) eingeleitet wird, wobei die pulverisierte Kohle, die durch die Mühle (3) pulverisiert wurde, durch das erste rückgeführte Abgas zu einem Brenner (6) für eine Oxyfuel-Verbrennung mit dem Sauerstoff und dem zweiten rückgeführten Abgas übertragen wird, wobei die Vorrichtung Folgendes umfasst:
eine O₂-Dichte-Überwachungseinheit (31) zum Messen einer O₂-Dichte (31a) von Sauerstoff, der in den Kohleverbrennungskessel (4) eingeleitet wird,
ein Durchflussmengenmessgerät (32) zum Messen einer Durchflussmenge (32a) von Sauerstoff, der in den Kohleverbrennungskessel (4) eingeleitet wird,
eine O₂-Dichte-Überwachungseinheit (33) zum Messen einer O₂-Dichte (33a) der gesamten rückgeführten Abgase, die in die Mühle (3) und in den Kohleverbrennungskessel (4) eingeleitet werden,
ein Durchflussmengenmessgerät (34) zum Messen einer Durchflussmenge (34a) der gesamten rückgeführten Abgase, die in die Mühle (3) und in den Kohleverbrennungskessel (4) eingeleitet werden,
eine Durchflussmengen-Regulierungseinheit (29) zum Regulieren einer Durchflussmenge der gesamten rückgeführten Abgase, die in die Mühle (3) und den Kohleverbrennungskessel (4) eingeleitet werden, und
eine Steuerung (30) zum Berechnen einer in den Kessel eingebrachten Sauerstoffdichte, die eine Sauerstoffdichte für eine Gesamtmenge von Gasen ist, die in den Kohleverbrennungskessel (4) eingeleitet wurde, auf Basis der O₂-Dichten (31a, 33a), die von den jeweiligen O₂-Dichte-Überwachungseinheiten (31, 33) gemessen wurden, und der Durchflussmengen (32a, 34a), die von den jeweiligen Durchflussmengenmessgeräten (32, 34) gemessen wurden, wobei die Steuerung (30) ein Durchflussmengen-Steuersignal (29a) an die Durchflussmengen-Regulierungseinheit (29) ausgibt, derart, dass die in den Kessel eingebrachte Sauerstoffdichte in einen vorgegebenen Bereich fällt.

3. Vorrichtung zur Steuerung einer Verbrennung in einem Oxyfuel-Verbrennungskessel nach Anspruch 1 oder 2, wobei die in den Kessel eingebrachte Sauerstoffdichte in einem Bereich von 25 bis 30 % liegt.

## Revendications

1. Appareil destiné à commander la combustion dans une chaudière à oxycombustion dans lequel de l'oxygène fourni depuis une unité de séparation d'air (10) est introduit dans une chaudière à charbon (4), un gaz d'échappement en recirculation est introduit comme gaz d'échappement de recirculation primaire et secondaire dans un moulin (3) et la chaudière à charbon (4), respectivement, le charbon pulvérisé, pulvérisé par le moulin (3), étant transféré par ledit gaz d'échappement de recirculation primaire à un brûleur (6) pour une oxycombustion avec ledit oxygène et ledit gaz d'échappement de recirculation secondaire, l'appareil comprenant
un dispositif de surveillance de densité d'O₂ (22) destiné à détecter une densité d'O₂ (22a) d'oxygène devant être introduit dans la chaudière à charbon (4),
un débitmètre (23) destiné à détecter un débit (23a) d'oxygène devant être introduit dans la chaudière à charbon (4),
un dispositif de surveillance de densité d'O₂ (24) destiné à détecter une densité d'O₂ (24a) du gaz d'échappement de recirculation primaire devant être introduit dans le moulin (3),
un débitmètre (25) destiné à détecter un débit (25a) du gaz d'échappement de recirculation primaire devant être introduit dans le moulin (3),
un dispositif de surveillance de densité d'O₂ (26) destiné à détecter une densité d'O₂ (26a) du gaz d'échappement de recirculation secondaire devant être introduit dans la chaudière à charbon (4),
un débitmètre (27) destiné à détecter un débit (27a) du gaz d'échappement de recirculation secondaire devant être introduit dans la chaudière à charbon (4),
un régulateur de débit (29) destiné à réguler un débit des gaz d'échappement de recirculation totaux devant être introduits dans le moulin (3) et la chaudière à charbon (4) et
un dispositif de commande (30) destiné à calculer une densité d'oxygène apporté dans la chaudière qui est une densité d'oxygène pour une quantité totale des gaz introduits dans la chaudière à charbon (4) sur la base des densités d'O₂ (22a, 24a, 26a) détectées par les dispositifs de surveillance de densité d'O₂ (22, 24, 26) respectifs et des débits (23a, 25a, 27a) détectés par les débitmètres (23, 25, 27) respectifs, le dispositif de commande (30) fournissant en sortie un signal de commande de débit (29a) au régulateur de débit (29) de sorte que la densité d'oxygène apporté dans la chaudière se trouve dans une plage prédéterminée.

2. Appareil destiné à commander la combustion dans une chaudière à oxycombustion dans lequel de l'oxygène fourni depuis une unité de séparation d'air (10) est introduit dans une chaudière à charbon (4), un gaz d'échappement en recirculation est introduit comme gaz d'échappement de recirculation primaire et secondaire dans un moulin (3) et la chaudière à charbon (4), respectivement, le charbon pulvérisé, pulvérisé par le moulin (3), étant transféré par ledit gaz d'échappement de recirculation primaire à un brûleur (6) pour une oxycombustion avec ledit oxygène et ledit gaz d'échappement de recirculation secondaire, l'appareil comprenant
un dispositif de surveillance de densité d'O₂ (31) destiné à détecter une densité d'O₂ (31a) d'oxygène devant être introduit dans la chaudière à charbon (4),
un débitmètre (32) destiné à détecter un débit (32a) d'oxygène devant être introduit dans la chaudière à charbon (4),
un dispositif de surveillance de densité d'O₂ (33) destiné à détecter une densité d'O₂ (33a) des gaz d'échappement de recirculation totaux devant être introduits dans le moulin (3) et la chaudière à charbon (4),
un débitmètre (34) destiné à détecter un débit (34a) des gaz d'échappement de recirculation primaire totaux être introduits dans le moulin (3) et la chaudière à charbon (4),
un régulateur de débit (29) destiné à réguler un débit des gaz d'échappement de recirculation totaux devant être introduits dans le moulin (3) et la chaudière à charbon (4) et
un dispositif de commande (30) destiné à calculer une densité d'oxygène apporté dans la chaudière qui est une densité d'oxygène pour une quantité totale des gaz introduits dans la chaudière à charbon (4) sur la base des densités d'O₂ (31a, 33a) détectées par les dispositifs de surveillance de densité d'O₂ (31, 33) respectifs et des débits (32a, 34a) détectés par les débitmètres (32, 34) respectifs, le dispositif de commande (30) fournissant en sortie un signal de commande de débit (29a) au régulateur de débit (29) de sorte que la densité d'oxygène apporté dans la chaudière se trouve dans une plage prédéterminée.

3. Appareil destiné à commander la combustion dans une chaudière à oxycombustion selon la revendication 1 ou 2, dans lequel la densité d'oxygène apporté dans la chaudière se trouve dans une plage de 25 à 30 %.
